Europäisches Patentamt

European Patent Office

Office européen des brevets

(11) Veröffentlichungsnummer: **0 267 285**
A1

## (12) EUROPÄISCHE PATENTANMELDUNG

Veröffentlicht nach Art. 158 Abs. 3 EPÜ

(21) Anmeldenummer: 86904986.6

(22) Anmeldetag: 29.05.86

Daten der zugrundeliegenden internationalen Anmeldung:

(86) Internationale Anmeldenummer:
PCT/SU86/00051

(87) Internationale Veröffentlichungsnummer:
WO87/07185 (03.12.87 87/27)

(51) Int. Cl.³: **B 04 C 3/06**

(43) Veröffentlichungstag der Anmeldung:
18.05.88 Patentblatt 88/20

(84) Benannte Vertragsstaaten:
DE FR GB IT SE

(71) Anmelder: UKRAINSKY NAUCHNO-ISSLEDOVATELSKY
INSTITUT PRIRODNYKH GAZOV 'UKRNIIGAZ'
Krasnoshkolnaya nab., 20
Kharkov, 310125(SU)

(72) Erfinder: KISELEV, Viktor Mikhailovich
ul. Komandarma Uborevicha, 22-64
Kharkov, 310144(SU)

(74) Vertreter: Finck, Dieter et al,
Patentanwälte v. Füner, Ebbinghaus, Finck Mariahilfplatz
2 & 3
D-8000 München 90(DE)

(54) GAS-FLÜSSIGKEITSTRENNVORRICHTUNG.

(57) A gas-liquid separator comprises a casing (1) with an internal transverse partition (2) on which at least one vortical tube (3) is mounted along the axis of the casing (1). At the inlet of the tube is mounted a gas-fluid flux swirler (4), whereas its outlet is provided with a device (5) for diverting the liquid from the swirled gas-liquid flux. The device (5) for diverting the liquid consists of two annular elements (14, 15) mounted coaxially to the vortical tube (3), one after the other, along the flux path. Annular channels (22) are arranged between the first element (14), as seen along the flux path, and the butt-end (19) of the vortical tube (3) and between the butt-end of the elements themselves. The inlet area of each of the channels (22,22',22") is inclined at an angle of 10 to 60° to the longitudinal axis of the vortical tube (3) in the direction of its outlet.

FIG. 1

Croydon Printing Company Ltd.

# ABSCHEIDER FÜR GASE UND FLÜSSIGKEITEN

## Technisches Gebiet

Die Erfindung bezieht sich auf den Chemiemaschinenbau, u.z. auf die Abscheidungstechnik und betrifft insbesondere Abscheider für Gase und Flüssigkeiten.

## Zugrundeliegender Stand der Technik

Es ist ein Gleichstromabscheider für Gase und Flüssigkeiten eines Stoffaustauschtellers (SU-Urheberschein 345 926, IPK B 1d 3/20) bekannt, der einen senkrecht auf dem Teller angeordneten Zylinder mit einem Stromturbulator an Eintritt und einem Abscheidestutzen am Austritt enthält, der mit einem ringförmigen Element versehen ist, bei dem das Stirnende dem Turbulator entgegen hervortritt.

Diese Einrichtung hat jedoch eine geringe Intensität der Abscheidung von feindispersen Strömen, da ein Teil der Flüssigkeitstropfen durch die Abscheidungszone durchspringt.

Es ist ebenfalls ein Abscheider für Gase und Flüssigkeiten (SU-Urheberschein 501 765, IPK B 01 D 45/00) bekannt, der einen senkrecht auf dem Teller angeordneten Lochzylinder mit einem Turbulator am Eintritt, einen koaxial oberhalb des Zylinders angeordneten Abscheidestutzen mit einem ringförmigen Zwischenglied enthält, das sich zwischen der ersten und der zweiten Zone der Flüssigkeitsableitung befindet. Im Abscheider ist eine waagerecht trennende Scheidewand mit einem koaxialen Zwischenstutzen im Inneren des Abscheidestutzens zwischen dem Zylinder und dem ringförmigen Glied angeordnet. Der Oberteil des Abscheidestutzens ist oberhalb der Scheidewand mit nach unten geneigtgerichteten Öffnungen ausgeführt.

Eine solche konstruktive Ausführung des Abscheiders für Gase und Flüssigkeiten hat zur Folge, dass zwei Abscheidungszonen entstehen. Die erste befindet sich zwi-

- 2 -

schen dem Zylinder und dem kozxialen Zwischenstutzen,
die zweite - zwischen dem koaxialen Zwischenstutzen und
dem ringförmigen Glied. Gerade diese zwei Zonen bilden
mit den erwähnten Elementen eine Abscheidungseinheit
oder eine Einrichtung zur Flüssigkeitsableitung.

Im Vergleich zu dem oben beschriebenen Abscheider
gestattet eine solche konstruktive Ausführung des Abscheiders es, durch die Bildung von zwei Abscheidungszonen den Vorgang der Phasentrennung zu intensivieren.

Infolge einer starken Vergrösserung der Aussenabmessungen der Einrichtung zur Flüssigkeitsableitung entstehen jedoch in der bekannten Vorrichtung parasitäre
Wirbelbildungen, die ein Mitreissen der Flüssigkeit mit
dem abgeschiedenen Gas verursachen, im Zusammenhang womit die Wirksamkeit der Abscheidung, insbesondere für
feindisperse Ströme, unzureichend hoch ist. Ausserdem hat
die beschriebene Vorrichtung grosse Aussenabmessungen,
die durch eine beträchtliche Ausdehnung der Einrichtung
zur Flüssigkeitsableitung bedingt sind.

Offenbarung der Erfindung

Der Erfindung liegt die Aufgabe zugrunde, einen
Abscheider für Gase und Flüssigkeiten zu schaffen, bei
dem eine hohe Wirksamkeit der Phasenabscheidung unter
Verminderung der Längs- und Querabmessungen des Abschei-
ders durch konstruktive Ausführung der Einrichtung zur
Flüssigkeitsableitung gewährleistet wird.

Das Wesen der Erfindung besteht darin, dass bei
einem Abscheider für Gase und Flüssigkeiten, der ein Gehäuse mit einer inneren querangeordneten Trennwand ent-
hält, an der längs der Gehäuseachse zumindest ein Wirbelrohr montiert ist, an dessen Einlaufende ein Axialturbulator des Gasflüssigkeitsstromes und an dessen Auslaufende
eine Einrichtung zur Flüssigkeitsableitung aus dem ver-
drehten Gasflüssigkeitsstrom angeordnet sind, erfindungs-
gemäss die Einrichtung zur Flüssigkeitsableitung in Form mindestens zweier ringförmiger Elemente ausgebildet ist, die koaxial zum Wirbelrohr hintereinander in Strombewegungsrichtung angeordnet sind, wobei zwischen dem in Strombewegungsrichtung ersten Element und dem Stirnende des Wirbelrohres sowie zwischen den Stirnflächen der Elemente selbst Ringkanäle so gebildet sind, dass der Einlaufbereich jedes der Kanäle unter einem Winkel von 10 bis 60° zur Längsachse des Wirbelrohres in Richtung zu seinem Auslaufende hingeneigt ist.

Durch eine derartige konstruktive Ausführung der Einrichtung zur Flüssigkeitsableitung kann die Gesamtlänge der Abscheidungszone wesentlich verkürzt werden. Das wird dadurch erreicht, dass die ringförmigen Elemente geringe Abmessungen in Axialrichtung und kleine Ringkanäle untereinander aufweisen.

Es ist zweckmässig, dass der in Strombewegungrichtung erste Ringkanal durch abgeschrägte Stirnflächen des ersten ringförmigen Elementes und das Wirbelrohr gebilden wird, u.z. so, dass das ringförmige Element eine dem Turbulator zugewandte und von dem abgeschrägten Aussenrand des Wirbelrohres in Richtung zu dem Turbulator hin versetzte scharfe Innenkante hat, während der Ringkanal zwischen den ringförmigen Elementen durch die abgeschrägten Stirnflächen des in Strombewegungsrichtung ersten und zweiten Elementes so gebildet wird, dass das zweite ringförmige Element eine dem Turbulator zugewandte und von der Aussenkante des ersten Elementes in Richtung zu dem Turbulator hin versetzte scharte Kante hat.

Dadurch wird eine stufenlose Ableitung eines Flüssigkeitsfilmes ermöglicht, der sich im Wirbelrohr unter der Fliehkraftwirkung aus Einlaufstromtropfen bildet. Dabei wird die parasitäre Wirbelbildung durch Vorhandensein von scharfen Kanten der ringförmigen Elemente unterdrückt.

Es ist möglich, die Einrichtung zur Flüssigkeitsableitung so auszuführen, dass die ringförmigen Elemente als ein Ganzes mit dem Wirbelrohr und die Kanäle als im Körper dieses Rohres eingearbeitete Ringschlitze ausgeführt sind.

Dadurch wird die Konstruktion der Einrichtung zur Flüssigkeitsableitung vereinfacht, wobei sie aus einem Teil hergestellt wird, statt aus mehreren Teilen zusammengebaut zu werden.

Es ist eine solche Ausführung der Einrichtung zur Flüssigkeitsableitung möglich, bei der die Innenflächen der ringförmigen Elemente als Kegelflächen ausgeführt sind und einen Konfusordurchströmraum bilden.

Das trägt dazu bei, dass eine vollständigere Flüssigkeitsabscheidung aus dem verdrehten Gasflüssigkeitsstrom erzielt wird, da der Konfusorhohlraum besser als ein Zylinderhohlraum die parasitäre Wirbelbildung verhindert und ausserdem eine Erhöhung des Fliehkraft-Phasentrenneffekts fördert.

Es ist möglich, die ringförmigen Elemente als Ringe sichelförmigen Profils auszuführen, die unterienander Ringkanäle so bilden, dass sich die Unterkante des in Strombewegungsrichtung zweiten ringförmigen Elementes im Inneren des vorhergehenden ringförmigen Elementes befindet.

Durch diese konstruktive Ausführung der Einrichtung zur Flüssigkeitsableitung wird ein direktes Auftreffen des abzuscheidenden Gasflüssigkeitsstromes auf die Wand eines Abschirmungsmantels unter anschliessender Zurückwerfung von dieser und Bildung von parasitären Wirbeln verhindert.

Es ist zweckmässig, wenn die Breite des Ringkanals im Einlaufbereich 0,01 bis 0,08 Durchmesser des Wirbelrohres beträgt.

Dadurch wird eine stufenlose Flüssigkeitsableitung aus dem Gasflüssigkeitsstrom ermöglicht und dabei eine minimale Gasmenge zum Rückumlauf mitgenommen.

Es ist erwünscht, dass die Ringkanäle in einem Abstand von 0,02 bis 1,0 Durchmesser des Wirbelrohres voneinander entfernt sind.

Das gestattet es, bei einem hohen Flüssigkeitsgehalt im Strom dem Durchspringen von Tropfen aus dem Wege zu gehen. Je höher der Flüssigkeitsgehalt im Strom ist, um so grösser muss der Abstand zwischen den Ringkanälen im Einlaufbereich der Einrichtung zur Flüssigkeitsableitung sein.

## Kurze Beschreibung von Zeichnungen

Nachstehend wird die Erfindung an Hand konkreter Ausführungsbeispiele und der beigeschlossenen Zeichnungen näher erläutert; es zeigen

Fig. 1  das Prinzipschaltbild eines erfindungsge-mässen  Abscheiders für Gase und Flüssigkeiten im Längsschnitt;

Fig. 2 die Ausführungsform einer Einrichtung zur Flüssigkeitsableitung als Konfusordurchströmraum;

Fig. 3 die Ausführungsform eines Abscheiders für Gase und Flüssigkeiten mit ringförmigen Elementen sichelförmigen Profils und Einzelabschirmungsmantel (Stutzen).

## Bevorzugte Ausführungsform der Erfindung

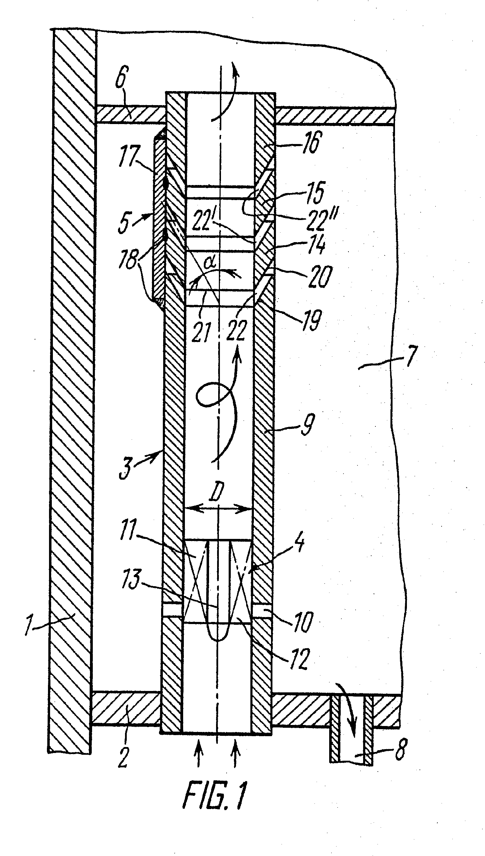

Der Abscheider für Gase und Flüssigkeiten umfasst ein Gefäuse 1 (Fig. 1) mit einer inneren quer angeordneten  Trennwand 2, an der wenigstens ein Wirbelrohr 3 längs der Achse des Gehäuses 1 montiert ist. An seinem Einlaufende ist ein Axialturbulator 4 und am Auslaufende eine Einrichtung 5 zur Flüssigkeitsableitung aus dem verdrehten Gasflüssigkeitsstrom angeordnet, die sich hinter eine flache abschirmende quer angeordnete Trennwand 6 erstreckt. Zusammen mit dem Gehäuse 1 bilden die Trennwände 2 und 6 eine isolierte Sammelkammer 7 für abgeschiedene Flüssigkeit, die über einen Auslasstutzen 8 entfernt wird.

- 6 -

Das Wirbelrohr 3 stellt einen walzenförmigen Körper 9 dar, in dem der Axialturbulator 4 ortsfest angebracht ist, der sich im Einlaufbereich in der Zone von Bohrungen 10 befindet. Der Axialturbulator 4 enthält Schrägschaufeln 11, 12, die an einer von oben offenen Mittelbuchse 13 befestigt sind. Durch die Bauart des Axialturbulators 4 mit den im Bereich der Bohrungen 10 befindlichen Schaufeln wird die Gasabsaugung aus der Kammer 7 zur Wiederabscheidung im Wirbelrohr 3 gewährleistet.

Die Einrichtung 5 zur Flüssigkeitsableitung enthält mindestens zwei ringförmige Elemente, aber es kann ihrer auch mehr sein, wie z.B. Fig. 1 zeigt. Die ringförmigen Elemente 14, 15, 16 sind untereinander und mit dem Körper 9 mit Hilfe einer Auflageleiste 17 oder mittels Schweissverbindungen 18 oder Punktabstützungen verbunden (in der Zeichnung ist es nicht dargestellt). Das Wirbelrohr 3 ist mit einem abgeschrägten äusseren Stirnende 19 ausgeführt, und das erste ringförmige Element 14 hat ebenfalls eine abgeschrägte Stirnfläche 20. Das abgeschrägte äussere Stirnende 19 des Wirbelrohres 3 und die abgeschrägte Stirnfläche 20 des ersten ringförmigen Elementes 14 bilden mit der scharfen Innenkante 21 einen unter einem Winkel $\angle$ zur Längsachse des Wirbelrohres 3 geneigten Ringkanal 22. Der Winkel $\angle$ kann sich von 10 bis 60° ändern. Mit einem Winkelwert von kleiner als 10° geschieht ein grosser Flüssigkeitsaustrag gemeinsam mit dem Gasstrom, und mit einem Winkelwert von über 60° findet ein grosser Gasaustrag mit dem Flüssigkeitsstrom statt.

Die ringförmigen Elemente 14, 15, 16 der Einrichtung 5 zur Flüssigkeitsableitung des Abscheiders für Gase und Flüssigkeiten können als ein Ganzes mit dem Wirbelrohr 3 und die Ringkanäle 22, 22', 22" als im Körper 9 dieses Rohres eingearbeitete Ringschlitze ausgeführt werden.

In manchen Fällen ist diese Ausführungsform fertigungsgerechter herstellbar.

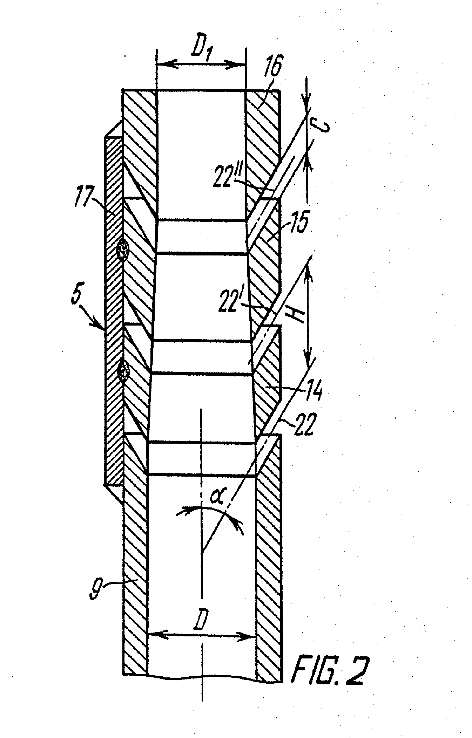

Fig. 2 zeigt eine Ausführungsform der Einrichtung 5 zur Flüssigkeitsableitung mit einem Konfusordurchströmteil. Dabei verjüngt sich der Durchströmteil stufenlos vom Durchmesser D des walzenförmigen Körpers 9 auf den Durchmesser $D_1$ im ringförmigen Element 16. Die Breite C des Ringkanals 22 kann im Einlaufbereich (0,01 bis 0,08) D betragen. Für die drei in Fig. 1 und 2 dargestellten Kanäle 22, 22', 22" kann die Grösse C für jeden von denen im allgemeinen Fall individuell sein und nicht mit den benachbarten Grössen zusammenfallen. Die unterschiedliche Breite C der Ringkanäle wird ausgehend von konkreten Bedingungen der zu lösenden technologischen Aufgabe ausgewählt: Gasdurchsatz und Flüssigkeitsdurchfluss, deren Viskosität, Oberflächenspannung, Dichte usw. Der Kanalabstand H kann ebenfalls gleich oder verschieden innerhalb (0,02 bis 1,0) D sein.

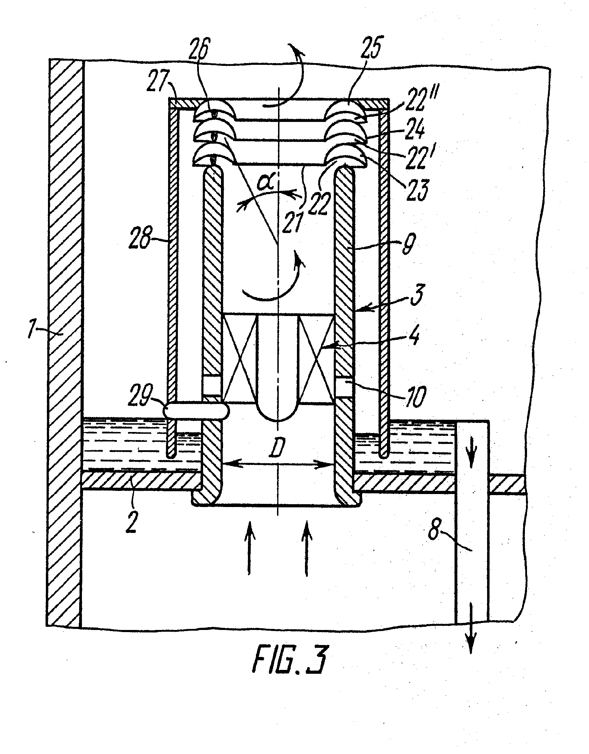

Wenden wir uns nun der Fig. 3 zu, die eine Ausführungsform des Abscheiders für Gase und Flüssigkeiten mit den ringförmigen Elementen 23, 24, 25 sichelförmigen Profils und einem Einzel-Abschirmungsmantel 28 zeigt.

Die Einrichtung 5 zur Flüssigkeitsableitung ist aus den einzelnen ringförmigen Elementen 23, 24 und 25 sichelförmigen Profils zusammengestellt, die die Flüssigkeitsableitkanäle 22, 22', 22" bilden. Dabei sind die Einlaufbereiche der Kanäle 22, 22', 22" unter einem spitzen Winkel $\alpha$ zur Längsachse des Wirbelrohres 3 orientiert. Die Elemente 23, 24 und 25 sind durch Punktabstützungen 26 voneinander getrennt und gegen den walzenförmigen Körper 9 mit einem Deckel 27 gedrückt, der mit dem mit Hilfe eines Stiftes 29 im Körper 9 des Wirbelrohres 3 befestigten Abschirmungsmantel 28 verbunden ist.

Fig. 1 bis 3 zeigen eine senkrechte Ausführungsform des Abscheiders für Gase und Flüssigkeiten. Er kann jedoch auch in waagerechter oder geneigter Stellung betrieben werden.

Der Abscheider für Gase und Flüssigkeiten arbeitet wie folgt.

Der einlaufende Gasflüssigkeitsstrom passiert den ortsfesten Axialturbulator 4 und wird hinter diesem in Drehbewegung versetzt. Unter der Fliehkraftwirkung werden die Flüssigkeitstropfen gegen die Innenwand des walzenförmigen Körpers 9 zurückgeworfen, und die Flüssigkeit strömt in Form eines verdrehten Filmes schraubenlinig durch Reibungskräfte eines verdrehten Gasstrahls an der Phasengrenze aufwärts. Zusammen mit einem Gasteil wird ferner die Flüssigkeit in Strombewegungsrichtung durch die Kanäle 22, 22', 22" stufenlos abgeleitet. Dann fliesst die Flüssigkeit auf die Trennwand 2 herab und wird über den Auslasstutzen 8 abgeleitet, und das Gas strömt durch die Öffnungen 10 dem Wirbelrohr 3 zu. Auf diese Weise erfolgt der Rückumlauf des Gases im Wirbelrohr 3. Dabei beträgt der rückumlaufende Gasstrom 5 bis 15% von seinem Durchsatz durch das Wirbelrohr.

Fig. 2 zeigt die Einrichtung 5 zur Flüssigkeitsableitung mit Konfusordurchströmraum. Diese Konstruktion fördert eine intensivere Flüssigkeitsabscheidung von Gas im Fliehkräftefeld, da die auf die Flüssigkeit einwirkenden Fliehkräfte je nach der Bewegung des verdrehten Strahles in dem sich von dem Wert D auf $D_1$ verjüngenden Durchströmraum zunehmen. Die Fliehkraft steigt je nach der Durchmesserverminderung des Durchströmteils aufgrund einer Verringerung des Trägheitsradius an. Je nach der Verjüngung des verdrehten Strahles wächst ausserdem seine Rotationsgeschwindigkeit im peripheren Teil an.

Bei einem hohem Flüssigkeitsgehalt im Strom bildet sich ein Dickfilm, an dessen Oberfläche Wellenkämme entstehen. Diese Wellenkämme können durch einen kurzen Abschnitt der Einrichtung 5 zur Flüssigkeitsableitung durchspringen. Es ist daher erwünscht, den Abstand H zwischen den Ringkanälen 22, 22', 22" am Anfang der Einrichtung 5 zur Flüssigkeitsableitung grösser zu machen als in ihrem Endteil. Durch diese Ausführung wird eine wirkungsvolle Phasentrennung gewährleistet.

Mit gleichem Aussendurchmesser des Wirbelrohres 3 sichert die Konfusorform des Durchströmteils eine wirkungsvollere Phasentrennung im Vergleich zu seiner Zylinderform. Dabei nimmt jedoch die Leistung des Abscheiders für Gase und Flüssigkeiten etwas ab, und der Energieaufwand steigt aufgrund einer Erhöhung der Druckverluste (des Druckgefälles) an.

Im Falle der in Fig. 3 dargestellten Ausführung des Abscheiders für Gase und Flüssigkeiten wird die Flüssigkeit mit Hilfe der ringförmigen Elemente 23, 24 und 25 sichelförmigen Profils stufenlos abgeleitet. Durch den Deckel 27 und den auf dem Teller 2 in die Flüssigkeit abgesenkte Abschirmungsmantel 28 wird eine Zirkulation des Gases durch die Öffnungen 10 dank seinem Durchlauf durch den ringförmigen Hohlraum zwischen dem walzenförmigen Körper 9 und dem Abschirmungsmantel 28 gewährleistet.

Durch die erfindungsgemässe Ausführung eines Abscheiders für Gase und Flüssigkeiten kann die Aufgabe gelöst werden, einen Hochleistungsabscheider in Kleinbauweise zu schaffen, der sowohl in einem gesonderten Gehäuse aufgestellt, als auch in Betrieb befindliche Stoffaustauschkolonnen und chemische Reaktoren für Gas-Flüssigkeit-Systeme leicht eingebaut werden kann.

## Industrielle Anwendbarkeit

Durch die vorliegende Erfindung wird die Schaffung eines hochproduktiven Abscheiders für Gase und Flüssigkeiten in Kleinbauweise für verschiedene Industriezweige, in denen die Trennung von Gas-Flüssigkeit-Systemen erforderlich ist, ermöglicht. Sie kann in der Erdöl- und Endgasindustrie für die Erdöl- oder Gaskondensatabscheidung aus dem Gasstrom, für die Abscheidung von Glykol-, Amin-, Methanoltropfen in Gasverarbeitungsanlagen aus-

genutzt werden. In der chemischen Industrie kann die Erfindung in den verschiedensten Vorgängen, in denen die Trennung der Gas-Flüssigkeit-Systeme erforderlich ist, und in der Wärmeenergietechnik für die Hochdruckabscheidung von Wassertropfen aus dem Wasserdampf verwertet werden.

PATENTANSPRÜCHE

1. Abscheider für Gase und Flüssigkeiten der ein Gehäuse (1) mit einer inneren quer angeordneten Trennwand (2) enthält, an der längs der Achse des Gehäuses (1) zumindest ein Wirbelrohr (3) montiert ist, an dessen Einlaufende ein Axialturbulator (4) des Gasflüssigkeitsstromes und an dessen Auslaufende eine Einrichtung (5) zur Flüssigkeitsableitung aus dem vedrehten Gasflüssigkeitsstrom angeordnet sind, d a d u r c h  g e k e n n z e i c h n e t, dass die Einrichtung (5) zur Flüssigkeitsableitung in Form zweier ringförmiger Elemente (14, 15) ausgebildet ist, die koaxial zum Wirbelrohr 3 hintereinander in Strombewegungsrichtung angeordnet sind, wobei zwischen dem in Strombewegungsrichtung ersten Element (14) und dem Stirnende (19) des Wirbelrohres (3) sowie zwischen den Stirnflächen der Elemente (14, 15, 16) selbst Ringkanäle (22, 22', 22") so gebildet sind, dass der Einlaufbereich jedes der Kanäle unter einem Winkel von 10 bis 60° zur Längsachse des Wirbelrohres (3) in Richtung nach seinem Auslaufende hin geneigt ist.

2. Abscheider für Gase und Flüssigkeiten nach Anspruch 1, d a d u r c h  g e k e n n z e i c h n e t, dass der in Strombewegungsrichtung erste Ringkanal (22) durch abgeschrägte Stirnflächen (20) des ersten ringförmigen Elementes (14) und des Wirbelrohres (3) so gebildet ist, dass das ringförmige Element (14) eine dem Turbulator (4) zugewandte und von dem abgeschrägten Aussenrand des Wirbelrohres (3) in Richtung zu dem Turbulator (4) hin versetzte scharfe Innenkante (21) hat, während der Ringkanal (22) zwischen den ringförmigen Elementen durch die abgeschrägten Stirnflächen des in Strombewegungsrichtung ersten und zweiten Elementes (14,15) so gebildet ist, dass das zweite ringförmige Element (15) eine dem Turbulator (4) zugewandte und von der Aussenkante des ersten Elementes (14) in Richtung zu dem Turbulator (4) hin versetzte scharfe Kante hat.

- 12 -

3. Abscheider für Gase .und Flüssigkeiten nach Anspruch 1, 2, d a d u r c h   g e k e n n z e i c h n e t, dass die ringförmigen Elemente (14, 15, 16) als ein Ganzes mit dem Wirbelrohr (3) und die Kanäle (22, 22', 22") als im Körper dieses Rohres (3) eingearbeitete Ringschlitze ausgeführt sind.

4. Abscheider für Gase und Flüssigkeiten nach Ansprüchen 1 bis 3, d a d u r c h   g e k e n n z e i c h n e t, dass die Innenflächen der ringförmigen Elemente (14, 15, 16) als Kegelflächen ausgeführt sind und einen Konfusordurchströmraum bilden.

5. Abscheider für Gase und Flüssigkeiten nach Anspruch 1, d a d u r c h   g e k e n n z e i c h n e t, dass die ringförmigen Elemente als Ringe (23, 24, 25) sichelförmigen Profils ausgeführt sind, die untereinander Ringkanäle (22, 22', 22") so bilden, dass sich die Unterkante des in Strombewegungsrichtung zweiten ringförmigen Elementes im Inneren des vorhergehenden ringförmigen Elementes befindet.

6. Abscheider für Gase und Flüssigkeiten nach Ansprüchen 1 bis 5, d a d u r c h   g e k e n n z e i c h n e t, dass die Breite (C) des Ringkanals (22) im Einlaufbereich 0,01 bis 0,08 Durchmesser D des Wirbelrohres (3) beträgt.

7. Abscheider für Gase und Flüssigkeiten nach Ansprüchen 1 bis 6, d a d u r c h   g e k e n n z e i c h n e t, dass die Ringkanäle (22, 22', 22") in einem Abstand von 0,02 bis 1,0 Durchmesser (D) des Wirbelrohres (3) voneinander entfernt sind.

113

FIG.1

FIG. 2

FIG.3

# INTERNATIONAL SEARCH REPORT

International Application No PCT/SU 86/00051

| I. CLASSIFICATION OF SUBJECT MATTER (if several classification symbols apply, indicate all) |
|---|
| According to International Patent Classification (IPC) or to both National Classification and IPC |
| Int.Cl.$^4$: B 04 C 3/06 |

## II. FIELDS SEARCHED

| Minimum Documentation Searched | |
|---|---|
| Classification System | Classification Symbols |
| Int.Cl.$^4$: | B 04 C 3/00, 3/06, B 01 D 45/00, 45/12 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| Y | US, A, 4187089 (Maloney-Crawford Tank Corporation) 5 February 1980, see the abstract | 1,2 |
| Y | SU, A1, 643173 (R.Z. Galperin, et al.) 28 January 1979, see the drawing | 1,2 |
| A | US, A, 3258895 (Joy Manufacturing Company) 5 July 1966, see column 4, lines 8-17 | 3 |
| A | GB, A, 1232556 (Porta-Test Manufacturing Limited) 19 May 1971, see page 4, line 98, figure 2 | 6 |
| A | GB, A, 1465833 (PERRY EQUIPMENT CORPORATION) 2 March 1977, see page 5, lines 3,4 | 1 |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art.
"&" document member of the same patent family.

## IV. CERTIFICATION

| Date of the Actual Completion of the International Search | Date of Mailing of this International Search Report |
|---|---|
| 03 December 1986 (03.12.86) | 26 February 1987 (26.02.87) |
| International Searching Authority | Signature of Authorized Officer |
| ISA/SU | |

Form PCT/ISA/210 (second sheet) (January 1985)